(19) Europäisches Patentamt
European Patent Office
Office européen des brevets

(11) **EP 4 645 216 A1**

(12) **EUROPEAN PATENT APPLICATION**
published in accordance with Art. 153(4) EPC

(43) Date of publication:
**05.11.2025 Bulletin 2025/45**

(51) International Patent Classification (IPC):
*G06T 7/00* *(2017.01)*    *G06T 7/12* *(2017.01)*
*G06T 7/13* *(2017.01)*    *G06V 10/762* *(2022.01)*

(21) Application number: 23910412.8

(22) Date of filing: 22.12.2023

(86) International application number:
**PCT/CN2023/141118**

(87) International publication number:
**WO 2024/140486 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 28.12.2022 CN 202211705003

(71) Applicants:
• **NUCTECH COMPANY LIMITED
Beijing 100084 (CN)**
• **Tsinghua University
Haidian District,
Beijing 100084 (CN)**

(72) Inventors:
• **ZHANG, Li
Beijing 100084 (CN)**
• **CHEN, Zhiqiang
Beijing 100084 (CN)**
• **SUN, Yunda
Beijing 100084 (CN)**
• **WANG, Shuo
Beijing 100084 (CN)**
• **SHEN, Le
Beijing 100084 (CN)**
• **LU, Qian
Beijing 100084 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **METHOD AND APPARATUS FOR SEPARATING TARGET OBJECT IN THREE-DIMENSIONAL CT IMAGE, AND SECURITY INSPECTION CT SYSTEM**

(57)    The present disclosure relates to the field of security inspection. Provided is a method for separating a target object in a three-dimensional CT image. The method comprises: on the basis of CT data, acquiring point cloud data, the CT data being obtained by a security inspection device performing computed tomography scanning on N objects to be inspected, and N being greater than or equal to 2; according to the point cloud data, determining a target object area in N said objects; and separating the target object area from a three-dimensional CT image. Further provided in the present disclosure are an apparatus for separating a target object in a three-dimensional CT image, a device, a storage medium and a program product.

Fig. 2

EP 4 645 216 A1

**Description**

The present application claims priority of Chinese Patent Application No. 202211705003.6 filed on December 28, 2022, which is incorporated by reference in the present application in its entirety.

**TECHNICAL FIELD**

The present disclosure relates to the field of security inspection technology, and more particularly relates to a method and apparatus for stripping a target object from a three-dimensional CT image, and a security inspection CT system, a medium and a program product.

**BACKGROUND**

CT (Computed Tomography), that is, computed tomography, which uses accurately collimated X-ray beam, $\gamma$-ray, ultrasonic wave and the like to perform tomographic scanning around a certain part of human body or an object together with an ultra-sensitive detector, and reconstructs the attenuation coefficient image of the object's tomographic section to obtain the internal structure and physical information of the object, so that several continuous slices obtained after continuous scanning may form a three-dimensional CT image, may be used to inspect multiple diseases, and may also be used to perform safety inspection on public places.

The three-dimensional CT image may be displayed on the display to help the image discriminator to discriminate. However, the three-dimensional CT image generally comprises multiple scanned objects that exhibit different texture complexities and are mutually stacked, so that the image discriminator might be disturbed so that the discrimination time is long, and even the discrimination result is inaccurate.

**SUMMARY**

The present disclosure provides a method and apparatus for stripping a target object from a three-dimensional CT image, and a security inspection CT system, a medium and a program product, which may automatically strip a target object during security inspection.

In one aspect of the embodiment of the present disclosure, a method for stripping a target object from a three-dimensional CT image is provided. The method comprises: obtaining point cloud data based on CT data, wherein the CT data is obtained by performing computed tomography on N objects to be inspected through a security inspection device, where N is greater than or equal to 2; determining a target object area in the N objects to be inspected according to the point cloud data; and stripping the target object area from the three-dimensional CT image, wherein the three-dimensional CT image is generated according to the CT data.

In some embodiments, after stripping the target object area, the method further comprises: displaying at least one image of the three-dimensional CT image before stripping, the three-dimensional CT image after stripping or the three-dimensional CT image of the target object on a security inspection image discrimination interface.

In some embodiments, the determining a target object area in the N objects to be inspected according to the point cloud data comprises: determining a local contour and size of the target object according to a first prior rule and the point cloud data, wherein the target object has a fixed shape in a use state or a non-use state, and the first prior rule is obtained according to the fixed shape of the target object; and determining the target object area based on the point cloud data according to the local contour and the size of the target object.

In some embodiments, the local contour of the target object comprises a first surface, and the determining a local contour and size of the target object comprises: determining the first surface according to the first prior rule and the point cloud data, wherein the first prior rule comprises a shape rule of the first surface; and determining the size of the target object in an axial direction of the first surface.

In some embodiments, before obtaining point cloud data based on CT data, the method further comprises: obtaining a direct volume rendering result, a first hit position and a normal vector of the first hit position through a multiple render targets technology based on the CT data, wherein the first hit position and the normal vector of the first hit position are used to obtain the point cloud data, and the direct volume rendering result is used to obtain the local contour and the size of the target object.

In some embodiments, the determining a local contour and size of the target object according to the first prior rule and the point cloud data comprises: over-segmenting the point cloud data by a super voxel clustering algorithm to obtain point cloud cluster data; and determining the local contour and the size of the target object from the point cloud cluster data according to the first prior rule.

In some embodiments, the N objects to be inspected comprise a suitcase and N-1 objects to be inspected in the suitcase, and the target object comprises a portable electronic device.

In some embodiments, the determining the first surface according to a first prior rule and the point cloud data comprises: determining M candidate surfaces of the portable electronic device based on the point cloud data, where M is greater than or equal to 1; and determining the first surface from the M candidate surfaces according to the first prior rule.

In some embodiments, the determining the first surface from the M candidate surfaces according to the first prior rule comprises: determining a largest candidate surface from the M candidate surfaces, and m candidate surfaces whose point cloud counts fall within a predetermined range relative to the largest candidate surface, wherein m is greater than or equal to 0, and less than or equal to M-1; and voting on the largest candidate surface and the m candidate surfaces to determine the first surface according to the first prior rule.

In some embodiments, the determining a size of the target object in an axial direction of the first surface comprises: performing direction correction and/or range correction on the first surface to obtain a second surface; and determining the size of the target object in an axial direction of the second surface.

In some embodiments, the size of the target object comprises a thickness of the portable electronic device, and the determining a size of the target object in an axial direction of the second surface comprises: determining a third surface and a fourth surface according to the second surface, wherein the third surface and the fourth surface intersect with each other and are perpendicular to the second surface respectively; and determining the thickness according to the third surface and the fourth surface.

In some embodiments, the obtaining the determined thickness data according to the third surface and the fourth surface comprises: splicing the third surface and the fourth surface along a first direction to obtain a fifth surface, wherein the first direction is parallel to the second surface; obtaining a histogram based on the projection of the fifth surface in the first direction; and determining the thickness according to the histogram within a predetermined range.

In some embodiments, before determining M candidate surfaces of the portable electronic device based on the point cloud data, the method further comprises: determining a pull rod area and/or a frame area of the suitcase according to a second prior rule and the point cloud data, wherein the second prior rule is obtained according to a fixed shape of the suitcase; removing the pull rod area and/or the frame area from the point cloud data.

In some embodiments, the determining a pull rod area and/or a frame area of the suitcase comprises: obtaining a first projection image of the point cloud data perpendicular to a first coordinate axis, wherein the first coordinate axis is parallel to a pull rod direction of the suitcase; and determining the pull rod area from a horizontal projection of the first projection image, and/or determining the frame area from a vertical projection of the first projection image according to the second prior rule.

In some embodiments, the determining a pull rod area of the suitcase comprises: searching a histogram generated by the horizontal projection to determine S first wave peak positions, where S is greater than or equal to 1; determining a target wave peak position from the S first wave peak positions according to the second prior rule, wherein the second prior rule comprises the prior position information of the pull rod area in the suitcase; and searching a first wave trough position corresponding to the target wave peak position as an initial position of the pull rod area.

In some embodiments, the determining a frame area of the suitcase comprises: searching a histogram generated by the vertical projection to determine two second wave peak positions at a left end and a right end; searching second wave trough positions corresponding to the respective second wave peak positions at the left end and the right end as initial positions of the frame area at the left end and the right end.

In some embodiments, the determining a pull rod area of the suitcase further comprises: projecting point cloud data of the pull rod area perpendicular to a second coordinate axis to obtain a second projection image, wherein the second coordinate axis is perpendicular to a pull rod direction of the suitcase, and the projections of at least two pull rods of the suitcase in the second projection image are parallel to each other; and determining the pull rod area from a vertical projection of the second projection image according to the second prior rule.

In some embodiments, if a plurality of first surfaces is determined from the M candidate surfaces, the method further comprises: determining a size of the target object in an axial direction of each of the first surfaces; and/or determining a target object area corresponding to each of the first surfaces.

In some embodiments, if a plurality of target object areas is determined according to the point cloud data, and the types of each target object are the same or different, the stripping the target object area from the three-dimensional CT image comprises: stripping a plurality of target object areas from the three-dimensional CT image sequentially.

In another aspect of the embodiment of the present disclosure, an apparatus for stripping a target object from a three-dimensional CT image is also provided. The apparatus comprises: a point cloud data module configured to obtain point cloud data based on CT data, wherein the CT data is obtained by performing computed tomography on N objects to be inspected by a security inspection device, and N is greater than or equal to 2; an area determining module configured to determine a target object area in the N objects to be inspected according to the point cloud data; a target stripping module configured to strip the target object area from the three-dimensional CT image, wherein the three-dimensional CT image is generated according to the CT data.

In some embodiments, the apparatus for stripping a target object from a three-dimensional CT image comprises modules for performing various steps of the method according to any of the above-described embodiments respectively.

According to another aspect of the embodiment of the present disclosure, a security inspection CT system is also provided. The system comprises: a CT scanning device configured to obtain CT data by performing computed tomography on N objects to be inspected, where N is greater than or equal to 2; an electronic device, comprising: a memory for storing the CT data from the CT scanning device and/or one or more programs; one or more processors; wherein the one or more programs, when executed by the one or more processors, cause the one or more processors to perform the method described above.

According to another aspect of the embodiment of the present disclosure, a computer-readable storage medium is also provided. The computer-readable storage medium stores executable instructions, when executed by a processor, cause a processor to perform the method described above.

According to another aspect of the embodiment of the present disclosure, a computer program product is also provided. The computer program product comprises a computer program that, when executed by a processor, implements the method described above.

## BRIEF DESCRIPTION OF THE DRAWINGS

The above-described content and other purposes, features, and advantages of the present disclosure will be more apparent from the following description of the embodiments of the present disclosure with reference to the accompanying drawings, in which:

Fig. 1 schematically shows an application scene graph of a security CT system according to an embodiment of the present disclosure;

Fig. 2 schematically shows a flow chart of a method for stripping a target object from a three-dimensional CT image according to an embodiment of the present disclosure;

Fig. 3 schematically shows a schematic view of a security inspection image discrimination interface according to an embodiment of the present disclosure;

Fig. 4 schematically shows a flow chart for determining a target object area according to an embodiment of the present disclosure;

Fig. 5 is a schematic view describing recording a position of an opaque area in a first hit volume data during light casting;

Fig. 6 schematically shows a flow chart of point cloud extraction according to an embodiment of the present disclosure;

Fig. 7 schematically shows a flow chart of removing a pull rod area and/or a frame area according to an embodiment of the present disclosure;

Fig. 8 schematically shows a schematic view of a rectified image according to an embodiment of the present disclosure;

Fig. 9 schematically shows a clustering flow chart according to an embodiment of the present disclosure;

Fig. 10 schematically shows a clustering effect diagram according to an embodiment of the present disclosure;

Fig. 11 schematically shows a flow chart of determining a first surface according to an embodiment of the present disclosure;

Fig. 12 schematically shows a flow chart of determining a size according to an embodiment of the present disclosure;

Fig. 13 schematically shows a schematic diagram of correction according to an embodiment of the present disclosure;

Fig. 14 schematically shows a schematic view of thickness according to an embodiment of the present disclosure;

Fig. 15 schematically shows a structural block diagram of an apparatus for stripping a target object from a three-dimensional CT image according to an embodiment of the present disclosure; and

Fig. 16 schematically shows a block diagram of an electronic device suitable for implementing a method for stripping a target object from a three-dimensional CT image according to an embodiment of the present disclosure.

## DETAILED DESCRIPTION

First of all, the technical terms involved in some embodiments of the present disclosure are interpreted as follows:

"OBB", Oriented Bounding Box, oriented bounding box. The bounding size and direction are determined according to a geometric shape of the object itself, while the bounding box is not required to be perpendicular to a coordinate axis.

"DVR", Direct Volume Rendering, direct volume rendering. The three-dimensional representation of CT data is directly obtained based on the laws of physics such as emission, absorption and scattering.

"FHP", First Hit Position, first hit position. FHP is a position where the light hits an opaque voxel of the volume data for the first time during the process of light casting.

"FHN", First Hit Normal, a normal vector of the first hit position. FHN is a normal vector at a position where the light hits an opaque voxel of the volume data for the first time during the process of light casting.

"Point cloud data" comprises a group of vector sets in a three-dimensional coordinate system, for example, the three-dimensional coordinate values and CT values of each pixel in a three-dimensional CT image.

"MRT technology" (Multiple Render Targets) allows programs to render to multiple color buffers at the same time, and feed different aspects of rendering results to different color buffers, for example, the values of different rgba color channels and depth values. Its function is to save the data of each pixel into different buffers. The merit as such is that these buffer data may accordingly become the parameters of a shader with a photo-level illumination effect.

"Super voxel clustering algorithm" is a segmentation method from images. Super voxel is a set, and the element of set is "volume". Similar to the volume in the voxel filter, it substantively consists of blocks. The purpose of super voxel clustering is not to segment a specific object, but to implement over segmentation on point cloud, to convert the scene point cloud into many blocks, and to study a relationship between each block.

"Portable electronic device" generally refers to a portable electronic device that can be hand-held with electrical power as energy, for example: a notebook computer, a tablet computer, an e-book, a mobile phone, a video player and an electronic game machine.

"Histogram" refers to a projection histogram, which is a method of projecting an image in a given direction, for example, in a vertical or horizontal direction. These projections mean the number of pixels belonging to an object in each column or row.

"PCA" (Principal Component Analysis), that is the principal component analysis technology, also referred to as the principal part analysis technology, which is intended to convert multiple indicators into a few comprehensive indicators using the concept of dimensionality reduction for dimensionality reduction of high-dimensional data, may be used to extract main feature components of data.

"Canny" is a multi-level edge detection algorithm. The concept of this algorithm is that: the detected edges should be as close as possible to the actual edges and as many as possible, and at the same time, the interference of noise on edge detection should be reduced as much as possible.

The basic principles of "Hough" transformation are to use the duality of points and lines, that is, a point in the original image coordinate system corresponds to a straight line in the parametric coordinate system, and likewise, a straight line in the parametric coordinate system corresponds to a point in the original coordinate system.

"RANSAC", which is the abbreviation of Random Sample Consensus, is an algorithm to calculate the mathematical model parameters of data according to a group of sample data sets containing abnormal data so as to obtain effective sample data.

Hereinafter, the embodiments of the present disclosure will be described with reference to the accompanying drawings. However, it should be understood that these descriptions which are only exemplary, are not intended to limit the scope of the present disclosure. In the following detailed description, for the sake of convenient explanation, many specific details are elaborated to provide a comprehensive understanding of the embodiments of the present disclosure. However, apparently, one or more embodiments may also be implemented without these specific details. Furthermore, in the following description, descriptions of common knowledge structures and technologies are omitted to avoid that the concepts of the present disclosure are unnecessarily confused.

The terms used here which are only for the purpose of describing specific embodiments, are not intended to limit the present disclosure. The terms "comprise", "include" and the like used here indicate the presence of features, steps, operations and/or components, but do not exclude the presence or addition of one or more other features, steps, operations or components.

All terms (comprising technical and scientific terms) used here have the meanings usually understood by those skilled in the art unless otherwise defined. It should be noted that, the terms used here should be construed as having meanings consistent with the context of this specification but should not be interpreted in an idealized or over-stereotyped way.

In the case of using an expression similar to "at least one of A, B and C", it should generally be interpreted according to the meaning of the expression usually understood by those skilled in the art (for example, "a system having at least one of A, B and C" should comprise but is not limited to a system having A alone, B alone, C alone, A and B, A and C, B and C, and/or A, B and C).

In the related art, a three-dimensional CT image may be displayed on a display device. Then, the selection of at least one area of the three-dimensional CT image by the image discriminator through an input device such as a mouse is received from a certain perspective. Next, a set of at least one three-dimensional object in the depth direction is generated based on the selection, and the target object that the image discriminator intends to mark is determined from the set. The image discriminator may select from a perspective to mark the three-dimensional target object, which may facilitate the image discriminator to mark a suspect in the CT image rapidly. However, the image discriminator is always faced with an entire three-dimensional CT image, which may still be affected between various object textures, and depend more on manual input operations.

For the problem that the image discriminator might be disturbed so that the discrimination time is long and even the discrimination result is inaccurate during the process of discriminating a three-dimensional CT image in the related art, the embodiment of the disclosure provides a method for stripping a target object from a three-dimensional CT image. The method comprises: obtaining point cloud data based on CT data, wherein the CT data is obtained by performing computed tomography on N objects to be inspected through a security inspection device, where N is greater than or equal to 2. The target object area in N objects to be inspected is determined according to the point cloud data. The target object area is stripped from the three-dimensional CT image.

According to the embodiment of the present disclosure, one or more target objects that might exist in the CT data may be automatically identified during the security inspection process, and the target object area may be determined according to the point cloud data and stripped from the three-dimensional CT image, so as to realize the independent discrimination of the target object area or the discrimination after removing the interference of the target object, which is helpful to improve the work efficiency and verification accuracy of the image discriminator.

It may be understood that the method and apparatus for stripping a target object from a three-dimensional CT image, the security CT system, the medium and the program product provided by the embodiments of the present disclosure may be applied in the fields of medical examination, industrial detection, security inspection and the like. Preferably, the embodiment of the present disclosure is further described by taking the field of security inspection as an example, for example, applied to security inspection scenes such as security, air transport, harbor transport and large cargo containers.

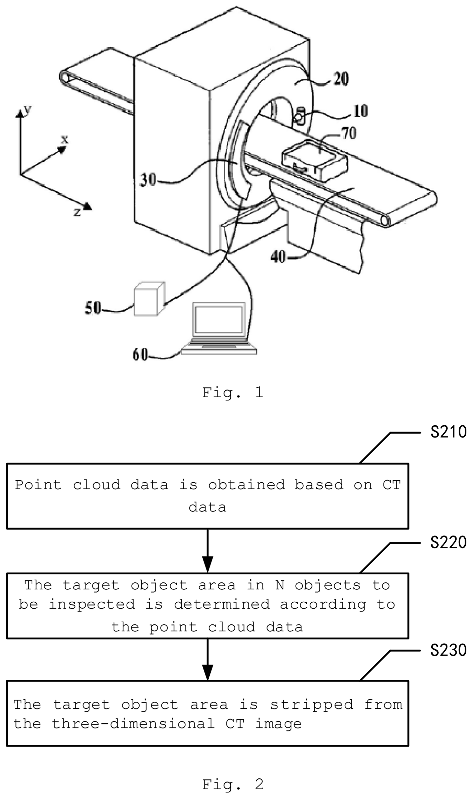

Fig. 1 schematically shows an application scene graph of a security CT system according to an embodiment of the present disclosure.

As shown in Fig. 1, the security CT system according to the embodiment of the present disclosure comprises a CT scanning device and an electronic device 60. The CT scanning device comprises: a machine frame 20, a carrier mechanism 40, a controller 50, and the like. The machine frame 20 comprises a radiation source 10, such as an X-ray machine, which emits X-rays for examination, and a detection and acquisition device 30. The carrier mechanism 40 carries the examined luggage 70 to pass through a scanning area between the radiation source 10 of the machine frame 20 and the detection and acquisition device 30, and at the same time, the machine frame 20 rotates around the forward direction of the examined luggage 70, so that the radiation emitted by the radiation source 10 may penetrate through the examined luggage 70 to perform CT scanning on the examined luggage 70.

The detection and acquisition device 30 is, for example, a detector and a data collector with an integral module structure, such as a flat detector, and configured to detect the radiation transmitted through an inspected article, obtain an analog signal, and convert the analog signal into a digital signal, so as to output the projection data of the examined luggage 70 for the X-ray. The controller 50 is configured to control all the parts of the entire system to work synchronously.

In some embodiments, the CT scanning device is configured to obtain CT data by performing computed tomography on N objects to be inspected, where N is greater than or equal to 2. The electronic device 60 is configured to receive CT data, process the data and reconstruct a CT image, and may perform the method for stripping a target object from a three-dimensional CT image provided by the embodiments of the present disclosure, or install an apparatus for stripping a target object from a three-dimensional CT image.

As shown in Fig. 1, the radiation source 10 is arranged on one side where the examined luggage 70 may be placed, and the detection and acquisition device 30 is placed on the other side of the examined luggage 70, which comprises a detector and a data collector, for obtaining multi-angle projection data of the examined luggage 70. The data collector comprises a data amplification and shaping circuit, which may work in a (current) integration mode or pulse (counting) mode. The data output cable of the detection and acquisition device 30 is connected with the controller 50 and the computer data processor 60, and the obtained data is stored in the electronic device 60 according to a trigger command.

The CT data obtained by the detection and acquisition device 30 is stored in the computer 60 for CT tomographic image reconstruction, so as to obtain tomographic image data of the examined luggage 70. Then, the electronic device 60 obtains the three-dimensional CT image of the examined luggage 70, the CT image of the stripped target object or the three-dimensional CT image after the target object is stripped from the tomographic image data, for example by executing software, so as to facilitate the security inspection by the image discriminator.

In some embodiments, the above-described CT imaging system may also be a dual-energy CT system, that is, the X-ray source 10 of the machine frame 20 may emit both high-energy and low-energy rays. After the detection and acquisition device 30 detects the projection data at different energy levels, the dual-energy CT reconstruction is performed by the electronic device 60 to obtain the equivalent atomic number and electron density data of each tomographic section of the examined luggage 70.

The electronic device 60 may be various electronic devices having a display screen and supporting web browsing, comprising but not limited to a smart phone, a tablet computer, a laptop computer, a desktop computer and the like.

It should be understood that the number of electronic devices and CT scanning devices in Fig. 1 is only schematic. As needed in implementation, there may be any number of electronic devices and CT scanning devices. For example, the electronic devices and the CT scanning devices are in one-to-one correspondence. Also, for example, multiple CT scanning devices are connected to the same electronic device. For another example, multiple electronic devices are connected to the same CT scanning device.

Based on the scene described in Fig. 1, the method for stripping a target object from a three-dimensional CT image in the embodiment of the present disclosure will be described below in detail by way of Figs. 2 to 14.

Fig. 2 schematically shows a flow chart of a method for stripping a target object from a three-dimensional CT image according to an embodiment of the present disclosure.

As shown in Fig. 2, the method for stripping a target object from a three-dimensional CT image in this embodiment comprises operations S210 to S230.

In operation S210, point cloud data is obtained based on CT data, wherein the CT data is obtained by performing computed tomography on N objects to be inspected by the security inspection device (for example, the CT scanning device), where N is greater than or equal to 2.

In some embodiments, for example, DICOM data of the CT image is converted into STL data by using 3D SLICER software, and then the STL data is converted into a point cloud, or the STL data is imported by using MESHLAB software and then saved as a point cloud. In other embodiments, the three-dimensional CT image may be binarized and the coordinate information of each pixel may be obtained so as to obtain point cloud data. In other embodiments, point cloud data may be obtained by using Multiple Render Targets technology.

In some embodiments, N objects to be inspected comprise a suitcase and N-1 objects to be inspected in the suitcase, and the target object comprises a portable electronic device. It is especially to be described that, the target object targeted by the embodiment of the present disclosure may not be limited to portable electronic devices, and any object that has a fixed shape in a use state or a non-use state and can extract common prior knowledge may be stripped.

In operation S220, the target object area in N objects to be inspected is determined according to the point cloud data.

Illustratively, the point cloud data may be first mapped into a two-dimensional plane, and then target detection is performed, so as to obtain the point cloud area of the target object based on the point cloud data. Wherein, the process of target detection may be realized by using an artificial intelligence model (for example, a deep learning model), or realized by processing and recognizing the projection image of the two-dimensional plane based on the prior knowledge of the target object.

In operation S230, the target object area is stripped from the three-dimensional CT image, wherein the three-dimensional CT image is generated according to the CT data.

In some embodiments, the point cloud data of the target object area may be reconstructed to obtain the three-dimensional CT image of the target object, and the point cloud data of the non-target object area may be reconstructed to obtain the stripped three-dimensional CT image.

In other embodiments, the point cloud data of the target object area may be mapped to each pixel point in the three-dimensional CT image, and these pixels may be stripped to generate the three-dimensional CT image of the target object independently. The pixels in the remaining non-target area form a stripped three-dimensional CT image.

According to the embodiment of the present disclosure, one or more target objects that might exist in the CT data are automatically identified during the security inspection process, and the target object area is determined according to the point cloud data and stripped from the three-dimensional CT image, so as to realize the independent discrimination of the target object area or the discrimination after removing the interference of the target object, which is helpful to improve the work efficiency and verification accuracy of the image discriminator.

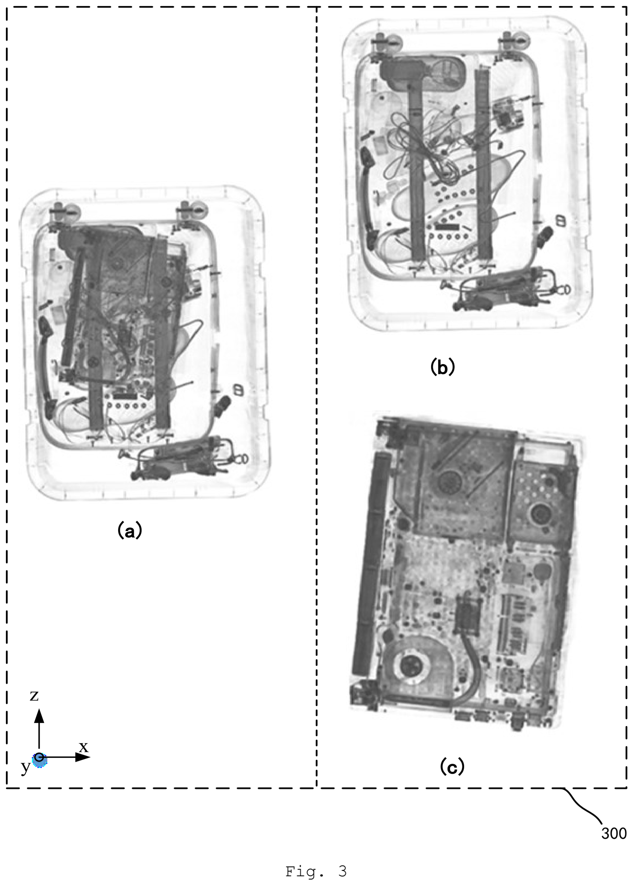

Fig. 3 schematically shows a schematic view of a security inspection image discrimination interface according to an embodiment of the present disclosure.

In some embodiments, as shown in Fig. 3, after stripping the target object area, it further comprises: displaying at least one of the three-dimensional CT image before stripping (Fig. 3(a)), the three-dimensional CT image after stripping (Fig. 3(b)) and the three-dimensional CT image of the target object (Fig. 3(c)) on the security inspection image discrimination interface.

Referring to Fig. 3, the target object is a notebook computer in a non-use state. The portable electronic device, such as a notebook computer, comprises complex electronic components, and the texture of the notebook computer in the obtained three-dimensional CT image is complex. Specifically, if only Fig. 3(a) is shown to the image discriminator, the texture of the image with which the image discriminator is to be faced is too complicated, and the area of the notebook computer may interfere with the judgment of other objects by the image discriminator. Similarly, since the notebook computer is placed together with other objects, the image discriminator cannot effectively judge the notebook computer itself, for example, whether there is contraband in the interlayer of the notebook computer.

According to the embodiment of the present disclosure, the notebook that might exist in the CT data is automatically identified during the process of luggage scanning. The realization of the independent discrimination of the notebook area (Fig. 3(c)) and the discrimination after removing the notebook interference from the suitcase data (Fig. 3(b)) is helpful to improve the work efficiency and the verification accuracy of the security staff.

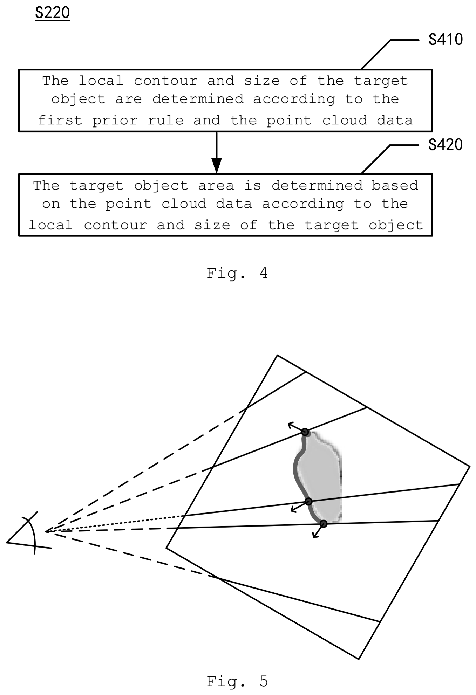

Fig. 4 schematically shows a flow chart for determining a target object area according to an embodiment of the present disclosure.

As shown in Fig. 4, the determining the target object area in operation S220 comprises operations S410 to S420.

In operation S410, the local contour and size of the target object are determined according to the first prior rule and the point cloud data, wherein the target object has a fixed shape in the use state or the non-use state, and the first prior rule is obtained according to the fixed shape of the target object.

Illustratively, when the target object is a portable electronic device, various portable electronic devices usually have a fixed shape in a use state or a non-use state. For example, when the notebook computer is folded in a non-use state, the product shapes of various manufacturers are similar, and the aspect ratios might also be similar (the specific sizes might be different). For example, in the notebook computer with a screen of 13 inches, 14 inches or 16 inches, the display screen of the same size has a similar shape. For another example, the shape of the tablet computer in a use state or non-use state is consistent, and the aspect ratio is also similar.

General shape rules may be obtained through the fixed shapes of various target objects, for example, the folded notebooks or the tablet computers are usually rectangular, and the aspect ratio is usually within a certain size range. Therefore, the first prior rule comprises multiple shape rules of the same category of target objects (for example, the notebook computer). The electronic device 60 may pre-store the first prior rules of various categories of target objects (for example, the tablet and the notebook) .

In some embodiments, the local contour of the target object comprises a first surface, and the determining the local contour and size of the target object comprises: determining the first surface according to a first prior rule and point cloud data, wherein the first prior rule comprises a shape rule of the first surface. The size of the target object in the axial direction of the first surface is determined.

Illustratively, the appearance shape of a product such as a tablet computer is a thin plate shape that is approximately a cuboid or a cube. When the target object is a tablet computer, its entire contour is a thin plate contour, while the local contour may be one of the planes of the tablet computer, and its size is an axial thickness of the plane contour. In some embodiments, if a certain surface of the target object is a curved surface, it may also be automatically identified as the first surface.

In operation S420, the target object area is determined based on the point cloud data according to the local contour and size of the target object.

Illustratively, the local contour and size are associated for determining the target object area. For example, it may be one plane of a tablet computer and its axial size, it may be two planes of a tablet computer parallel to each other and a size between the two planes, and it may be two planes of a tablet computer perpendicular to each other and respective axial sizes. In addition, it may also be more than two planes of a tablet computer and related sizes.

According to the embodiment of the present disclosure, the target object area may be determined only by identifying the local contour and size of the target object (for example, a certain surface and the size of a target object in its axial direction), thereby improving the image processing efficiency.

In some embodiments, before obtaining the point cloud data based on the CT data, it further comprises obtaining a direct volume rendering result, a first hit position and a normal vector of the first hit position through the Multiple Render Targets technology based on the CT data. Wherein, the first hit position and the normal vector of the first hit position are used to obtain point cloud data, and the direct volume rendering result is used to obtain a local contour and size of the target object.

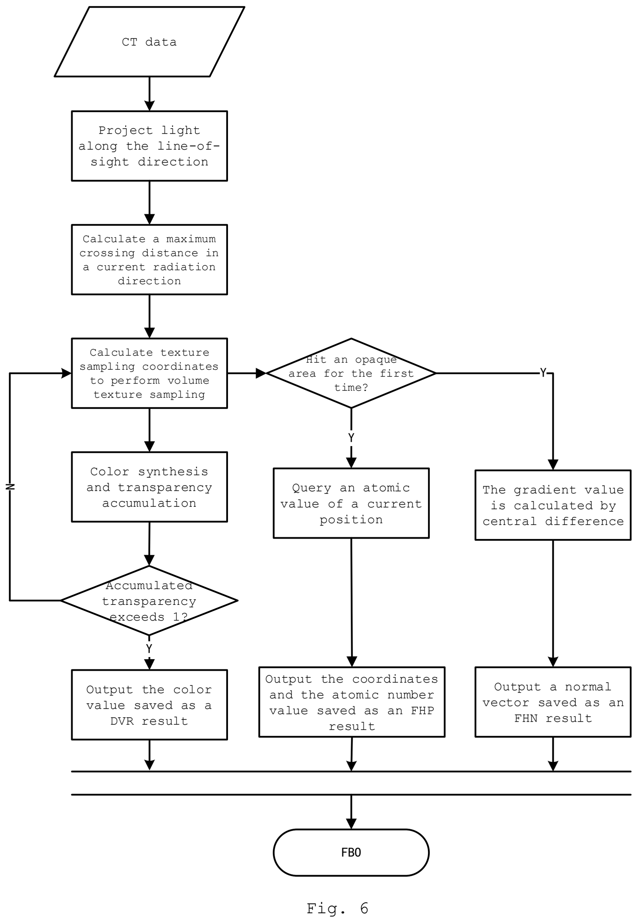

Fig. 5 is a schematic view describing recording a position of an opaque area in a first hit volume data during light casting. Fig. 6 schematically shows a flow chart of point cloud extraction according to an embodiment of the present disclosure.

Referring to Fig. 5, during the process of light casting, the position where the light hits an opaque area of the volume data for the first time is recorded, and the normal vector of this position is calculated at the same time. For example, the normal vector at the injection point is estimated by using a gradient of this voxel position.

As shown in Fig. 6, during the process of light casting, the DVR, FHP and FHN results of the CT data volume rendering are obtained simultaneously by using the Multiple Render Targets technology. Wherein, the DVR result is used for the display output of the foreground. The FHP and FHN results are stored in the video memory for extracting a point cloud.

During the process of light casting (for example, projecting light along the line-of-sight direction), the actual bounding box of the CT data serves as a carrier of the volume texture, and the volume texture corresponds to the bounding box through the texture coordinates. Then, a ray is led from the viewpoint to the point on the model, and the ray crossing the space of the bounding box is equivalent to the ray crossing the volume texture. The texture sampling coordinates are calculated to perform volume texture sampling. During the process of light crossing an image sequence, the color and transparency information is obtained by sampling according to a set step length value. According to the light absorption model, the color values are accumulated to obtain a direct volume rendering result of volume rendering (referred to as DVR for short), which is output to the foreground for display.

At the same time of color accumulation, for each projected light, record the position where the current light hits an opaque area of the volume data for the first time and store it in a texture, as shown in Fig. 5. This coordinate value is located in the volume texture coordinate system and marked as $(x_h, y_h, z_h)$, wherein $0 \le x_h \le 1, 0 \le y_h \le 1, 0 \le z_h \le 1$, stored in the RGB channels of pixels corresponding to FHP texture. Query an atomic number value of a corresponding voxel position and store it in the A channel of pixels corresponding to the FHP texture. At this voxel position, the normal vector is calculated at the same time, and the normal vector at the incidence point is estimated by using a gradient of this voxel position. The gray value at $(x_h, y_h, z_h)$ is marked as $f(x_h, y_h, z_h)$, and the gradient is calculated by using the following central difference method:

$$\nabla f(x_h, y_h, z_h) \approx \frac{1}{2} \begin{pmatrix} f(x_h + 1, y_h, z_h) - f(x_h - 1, y_h, z_h) \\ f(x_h, y_h + 1, z_h) - f(x_h, y_h - 1, z_h) \\ f(x_h, y_h, z_h + 1) - f(x_h, y_h, z_h - 1) \end{pmatrix}^T$$

After the gradient vector is normalized, $\frac{\nabla f(x_h, y_h, z_h) + (1,1,1)}{2}$ is executed, and each component is scaled to the range [0,1], and stored in the RGB channel of pixels corresponding to the FHP texture.

With a rendering pipeline of a programmable shader, a conventional method can only obtain a set of outputs of one pixel (stored in the color buffer). However, a rendering process is now desired to obtain three sets of outputs: DVR, FHP and FHN at the same time. By using the Multiple Render Targets technology, the shader may output a plurality of rendering targets in a single frame at the same time and save these rendering targets in the form of FBO.

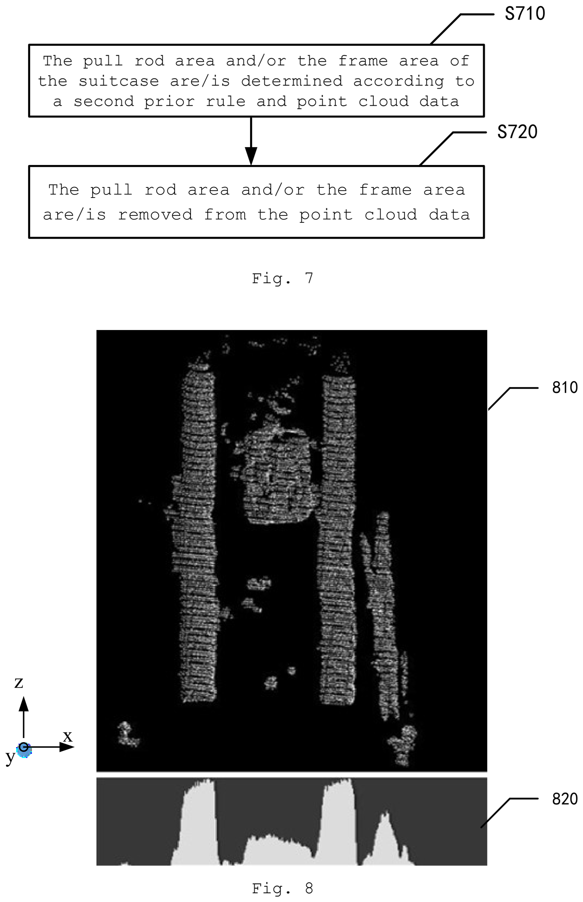

Fig. 7 schematically shows a flow chart of removing a pull rod area and/or a frame area according to an embodiment of the present disclosure. Fig. 8 schematically shows a schematic view of a rectified image according to an embodiment of the present disclosure.

As shown in Fig. 7, the removing a pull rod area and/or a frame area in this embodiment comprises operations S710 to S720.

In operation S710, the pull rod area and/or the frame area of the suitcase are/is determined according to a second prior rule and point cloud data, wherein the second prior rule is obtained according to the fixed shape of the suitcase.

Illustratively, the suitcase comprises a pull rod case with a pull rod and/or rollers. The pull rod case also has a single-tube pull rod and a double-tube pull rod. For example, the double-tube pull rod case of 20 inches and below may be boarded during security inspection at the airport (only as an example).

Illustratively, the shape of the suitcase is usually a cuboid, and the position of the pull rod is usually on one side of the suitcase, and for example, during security inspection at the airport, the pull rod direction is usually parallel to the movement direction of the security inspection passage. Therefore, the second prior rule may comprise the position of the pull rod inside the suitcase, the position between the pulled-out pull rod and the case body, the shape information of the case body and the like.

In operation S720, the pull rod area and/or the frame area are/is removed from the point cloud data.

According to the embodiment of the present disclosure, on the one hand, the pull rod area and/or the frame area and the object to be inspected in the suitcase may form a partially or completely shielded or overlapped relationship. In addition, after X-ray imaging, the metal pull rod usually presents the characteristics of a low area gray level and a high edge gradient, which are extremely similar to the material gray level property of the contraband. However, the pull rod area and the frame area might be areas that are not required to be discriminated by the image discriminator, but may shield other objects, which results in a more complex texture of the CT image. Therefore, it is possible to reduce the discrimination difficulty after removal. On the other hand, during the process of automatically identifying the first surface of the target object, since the double-tube pull rod comprises two parallel rods, it is extremely likely to be identified as the first surface, which results in false identification of the target object area, and the frame area is also prone to be falsely identified due to a rectangular shape. After removal, it is possible to improve the accuracy of automatically identifying the target object area.

In some embodiments, the determining the pull rod area and/or the frame area of the suitcase comprises: producing each suitcase template by using the second prior rule of various sizes of suitcases, matching the obtained point cloud data of the suitcase with a plurality of suitcase templates, and determining the pull rod area and/or the frame area according to the matched suitcase templates.

In other embodiments, the determining the pull rod area and/or the frame area of the suitcase comprises: first performing wheel identification on a suitcase image, then performing affine transformation on an original image according to the identified bearing coordinates, detecting a straight line in the image by using a straight line detection operator, identifying a straight line of the pull rod, performing integral projection on a straight line of the pull rod, and determining coordinates of the pull rod through the projection values to identify the pull rod area. Next, the contour of the suitcase image may be identified, and the frame area may be determined from the contour according to a relationship among the pull rod area, the wheel area and the frame area.

In other embodiments, the determining the pull rod area and/or the frame area of the suitcase comprises: obtaining a first projection image of the point cloud data perpendicular to a first coordinate axis, wherein the first coordinate axis is parallel to a pull rod direction of the suitcase. According to the second prior rule, the pull rod area is determined from the horizontal projection of the first projection image, and/or the frame area is determined from the vertical projection of the first projection image.

Illustratively, referring to Fig. 1, the first coordinate axis may be the z axis. Since the pull rod direction is parallel to the security inspection passage, it is parallel to the z axis, and the first projection image may display the vertical projection of the pull rod area.

Illustratively, first of all, a point cloud is projected along the z axis to obtain a first projection image. Next, the projection image is processed by using a threshold function (for example, binarized threshold processing). Next, morphological processing is performed using closed operation, and thresholding is performed again. Then, the processed image is projected in the horizontal and vertical directions respectively. Wherein, the horizontal projection refers to the integral projection of a two-dimensional image in the x axis direction according to the column; and the vertical projection refers to the integral projection of the two-dimensional image in the y axis direction according to the row. The projection result may be regarded as a one-dimensional image (one-dimensional array).

According to the embodiment of the present disclosure, after the two-dimensional projection image is obtained by using the point cloud data, the pull rod area and/or the frame area is/are determined and removed by using the prior information, which may reduce the data processing amount and improve the efficiency and accuracy.

In some embodiments, the determining the pull rod area of the suitcase comprises: searching the histogram generated by horizontal projection to determine S first wave peak positions, where S is greater than or equal to 1. The target wave peak position is determined from the S first wave peak positions according to a second prior rule, wherein the second prior rule comprises the prior position information of the pull rod area in the suitcase. The first wave trough position corresponding to the target wave peak position is searched as the initial position of the pull rod area.

Illustratively, the histogram generated by horizontal projection is searched and the wave peak position is counted. According to the prior position of the pull rod in the case body, the candidate positions are selected. For example, the X-axis histogram is scanned from left to right, from middle to left, from middle to right, and from right to left along the horizontal axis respectively to determine S first wave peak positions, and the target wave peak position is determined according to the prior position of the pull rod in the case body. Finally, the wave trough position corresponding to the wave peak in this area is searched as the initial position of the pull rod area.

For example, the prior position of the pull rod in the case body: for example, the pull rod mainly consists of two pull rods having a rectangular shape and located on both sides of the main axis of the case body respectively. The initial position of the pull rod area is used to determine an approximate range of the pull rod area in the point cloud data.

In some embodiments, the determining the frame area of the suitcase comprises: searching the histogram generated by vertical projection to determine two second wave peak positions at the left end and right end. The second wave trough positions corresponding to the respective second wave peak positions at the left end and right end are searched as the initial position of the frame area for determining an approximate range of the frame area in the point cloud data.

For example, the projection of the frame area may have many effective pixel points, so that it is likely to form the wave peak position in the histogram. Therefore, the histogram generated by vertical projection is searched for two wave peaks at the left end and right end, and the wave trough position corresponding to the wave peak is searched as the initial position of the case body border.

In other embodiments, after an approximate range of the pull rod area is determined, a more precise range of the pull rod area may be further confirmed. First of all, the point cloud data of the pull rod area is projected perpendicular to a second coordinate axis to obtain a second projection image, wherein the second coordinate axis is perpendicular to the pull rod direction of the suitcase, and the projections of at least two pull rods of the suitcase in the second projection image are parallel to each other; and then, the pull rod area is determined from the vertical projection of the second projection image according to the second prior rule.

Illustratively, referring to the upper half 810 in Fig. 8 for the second projection image, the point cloud of the pull rod area is projected along the y axis. Since the pull rod is perpendicular to the y axis, the second projection image may display a pull rod having a straight shape. The second projection image is binarized after morphological closed operation, and the contour is extracted to reduce the data scale of PCA. PCA is performed on the contour image, and the rotation image in the principal axis direction (for example, the x axis) obtained by PCA is used. Morphological closed operation is performed on the rotated image again. The edge is extracted by using Canny, and the pixels in the long axis direction are spliced in priority. The straight line is extracted by using the Probabilistic Hough transform, and the most possible pull rod direction is obtained after pairing according to the parallelism and the distance. As shown in Fig. 8, the image is rotated by using a new pull rod direction, and vertical projection (the lower half 820 of Fig. 8) is performed to judge the obtained histogram, and finally decide whether it is necessary to remove as the pull rod area. For example, by rotating around the x axis by+5° and-5°, the highest wave peak is displayed as a final rectified image in the lower half 820 of Fig. 8, and a corresponding pull rod area is accordingly confirmed for removal.

According to the embodiment of the present disclosure, during the process of automatically identifying the pull rod area, other objects might be removed if the identification area has an angular deviation, which results in that the image discriminator cannot effectively discriminate the image. The identification accuracy may be improved by reconfirmation.

It may be understood that, for the frame area of the suitcase, similar to the reconfirmation process of the pull rod area as above, the point cloud data of the frame area may also be further determined, which will not be described in detail here.

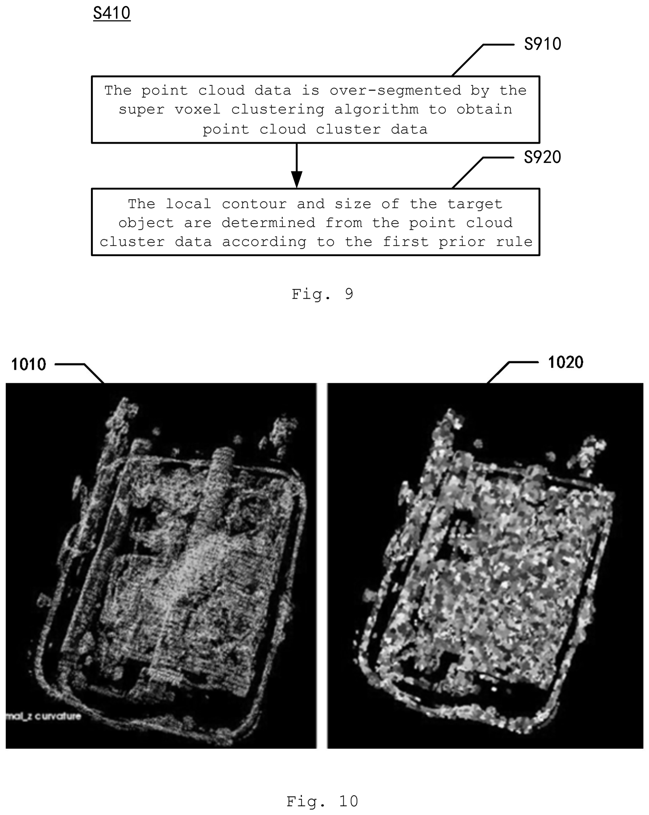

Fig. 9 schematically shows a clustering flow chart according to an embodiment of the present disclosure. Fig. 10 schematically shows a clustering effect diagram according to an embodiment of the present disclosure.

As shown in Fig. 9, the determining the local contour and size of the target object in operation S410 comprises operations S910 to S930.

In operation S910, the point cloud data (the left side 1010 in Fig. 10) is over-segmented by the super voxel clustering algorithm to obtain point cloud cluster data (the right side 1020 in Fig. 10).

Illustratively, the point cloud data after removing the pull rod area and/or the frame area may be over-segmented, and the point cloud data without removing the pull rod area and/or the frame area may also be over-segmented.

Over-segmentation is substantively a summary of the local, and the parts with similar textures, materials and colors may be automatically divided into a block (a point cloud cluster), which is beneficial to subsequent identification work.

In operation S920, the local contour and size of the target object are determined from the point cloud cluster data according to the first prior rule.

According to the embodiment of the present disclosure, in the security inspection scenes, the time from placing each luggage into the security inspection passage to leaving the security inspection passage is equivalent to the time for drawing the CT image, image processing and human-computer interaction (image discrimination) on the three-dimensional image. Since there are excessive original point clouds, if image processing is directly performed, it is possible to lead to slower speed. The clustered point cloud cluster data is processed, which reduces the data scale and improves the calculation speed and the security inspection efficiency.

The point cloud data after removing the pull rod area and/or the frame area will be over-segmented below, with the clustered point cloud cluster data as the processing object. Taking the target object that is a notebook computer as an example, the determining the local contour and size of the target object will be further described. It may be understood that the embodiment of the present disclosure is limited not only to processing clustered point cloud cluster data, but also to processing the original point cloud data.

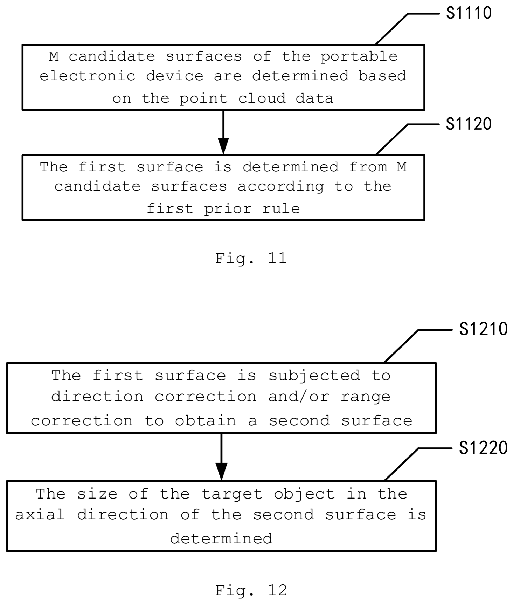

Fig. 11 schematically shows a flow chart of determining a first surface according to an embodiment of the present disclosure.

As shown in Fig. 11, the determining the first surface in this embodiment comprises operations S1110~S1120.

In operation S1110, M candidate surfaces of the portable electronic device are determined based on the point cloud data, where M is greater than or equal to 1.

Illustratively, RANSAC randomly selects a subset of samples from the samples (the point cloud cluster), calculates the model parameters for this subset by using the minimum variance estimation method, then calculates the deviations of all the samples from the model, and uses a preset threshold for comparison with the deviations. When the deviation is less than the threshold, this sample point pertains to the sample point within the model. Otherwise, it is the sample point beyond the model. The current number of sample points in the model is recorded, and this process is then repeated. Every repetition records the current optimal model parameters, and the so-called optimal is that the number of sample points within the model is the most. At the end of each iteration, an iteration end evaluation factor is calculated according to an expected error rate, the most inliers, a total number of samples, and current iteration times, so that whether iteration ends is decided accordingly. After iteration ends, the optimal model parameters are the final model parameter estimates.

Various point cloud cluster data may be processed as the above by using the RANSAC algorithm, and M candidate surfaces of the notebook computer may be obtained after multiple iterations.

In operation S1120, the first surface is determined from M candidate surfaces according to the first prior rule.

Illustratively, M candidate surfaces may be simply selected in the size and angle, so as to remove apparent error planes (for example, apparently not conforming to the first prior rule).

In some embodiments, the operation S1120 comprises: determining a largest candidate surface from the M candidate surfaces, and m candidate surfaces whose point cloud counts fall within a predetermined range relative to the largest candidate surface, wherein m is greater than or equal to 0, and less than or equal to M-1. According to the first prior rule, the largest candidate surface and m candidate surfaces are voted according to the first prior rule so as to determine the first surface.

First of all, the largest plane is found, and the relevant information is recorded: the point cluster corresponding to this plane is projected along a normal of the plane. The convex hull of the projection image is extracted, and the OBB bounding box is calculated for the convex hull. Morphological closed operation is performed on the projection image, non-zero pixels are counted, and the duty ratio (for example, the area ratio of non-zero pixels) is calculated by combining with the OBB bounding box.

Then, other candidate planes are traversed. The plane where the difference between the number of points and that of the maximum plane is less than 10% is found, and the above-described steps of calculating the duty cycle are repeated. These planes with more points are voted. For each surface to be voted, the following at least one voting index is comprised: an aspect ratio of a corresponding oriented bounding box, a short side length of an oriented bounding box and a duty ratio of non-zero pixels. For example, the voting rules comprise: an aspect ratio of an OBB bounding box, so that the one with a small ratio receives one vote; a short side length of an oriented bounding box, so that the longer one receives one vote; and an aspect ratio, so that the greater receives one vote.

Finally, the size is selected. According to the prior shape of the notebook computer in the first prior rule, the selecting criteria are that the aspect ratio is required to be less than 2.5 and the long side is required to be greater than 10cm (only as an example). Finally, the first surface is determined.

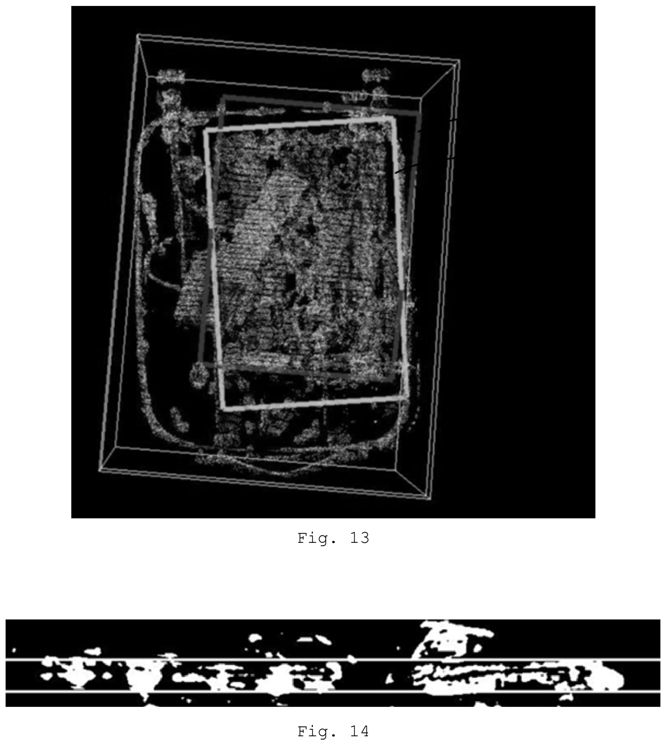

Fig. 12 schematically shows a flow chart of determining a size according to an embodiment of the present disclosure. Fig. 13 schematically shows a schematic diagram of correction according to an embodiment of the present disclosure. Fig. 14 schematically shows a schematic view of thickness according to an embodiment of the present disclosure.

As shown in Fig. 12, the determining the size of the target object in the axial direction of the first surface comprises operations S1210~S1220.

In operation S1210, the first surface is subjected to direction correction and/or range correction to obtain a second surface.

Illustratively, the process of direction correction and/or range correction is as follows:

(1) The gray slice of the main plane (i.e., the first surface) is obtained, and closed operation is performed after thresholding.

(2) The contour is extracted, and a small zone with an area less than a preset threshold is removed.

(3) The convexity defect points of the image contour are found. The defect points are paired. The contour between the paired defect points is removed, and the pair of defect points is reconnected. The above-described steps are repeated on a new contour.

(4) The result after removing convexity defects is calculated for the bounded rectangular zone with a minimum zone; the relevant axial directions (mainly the x axis and the y axis perpendicular to the normal direction) of the plane and the range of the plane are corrected while the slice is rotated. In Fig. 13, the line frame 1310 is the first surface before correction, and the line frame 1320 is the second surface after correction.

In operation S1220, the size of the target object in the axial direction of the second surface is determined.

According to the embodiment of the present disclosure, the first surface is corrected so that it is possible to effectively improve the accuracy of the target object area. In addition, if the range of the first surface has an error, it is also possible to lead to a poor effect after stripping, which affects an image discrimination result of the image discriminator.

In some embodiments, the size of the target object comprises a thickness of the portable electronic device, and the determining the size of the target object in the axial direction of the second surface comprises: determining a third surface and a fourth surface according to the second surface, wherein the third surface and the fourth surface intersect with each other and are perpendicular to the second surface respectively; and determining the thickness according to the third surface and the fourth surface.

In some embodiments, the determining the thickness according to the third surface and the fourth surface comprises: s splicing the third surface and the fourth surface along a first direction to obtain a fifth surface, wherein the first direction is parallel to the second surface; obtaining a histogram based on the projection of the fifth surface in the first direction; and determining the thickness according to the histogram within a predetermined range.

Illustratively, by using the corrected axial direction (the axial direction of the second surface), two lateral planes (the third surface and the fourth surface) are spliced along the horizontal direction (that is, the first direction) and then undergo thresholding, and the histogram is obtained by horizontal projection. The effective range of the histogram is counted to obtain a final thickness of the notebook computer. For example, the area between two straight lines as shown in Fig. 14 is the found thickness of the notebook computer.

In some embodiments, if the operation S1120 determines a plurality of first surfaces from the M candidate surfaces, it further comprises: determining the size of the target object in the axial direction of each first surface; and/or determining a target object area corresponding to each first surface.

According to the embodiment of the present disclosure, if there are a plurality of notebook computers in the suitcase, a plurality of first surfaces may be determined sequentially, and one or more of the above embodiments may be performed to determine respective local contours and sizes sequentially. After the area of each notebook computer is determined, it is stripped from the three-dimensional CT image respectively, which further improves the convenience of image discrimination.

In some embodiments, a plurality of target object areas is determined according to the point cloud data, and the types of each target object are the same or different. The stripping a target object area from a three-dimensional CT image comprises stripping a plurality of target object areas from the three-dimensional CT image sequentially.

Illustratively, multiple types of target objects and prior rules of various types of target objects may be input in the image discrimination system in the electronic device in advance. In the case where there is a plurality of target objects in the suitcase, one or more method steps described above are performed on each target object, for example, the target object areas of the current uppermost layer are stripped sequentially according to the placement order along the z axis.

According to the embodiment of the present disclosure, a plurality of target objects of different categories or the same category may be stripped, so as to reduce the texture interference between each other and further improve the convenience of image discrimination.

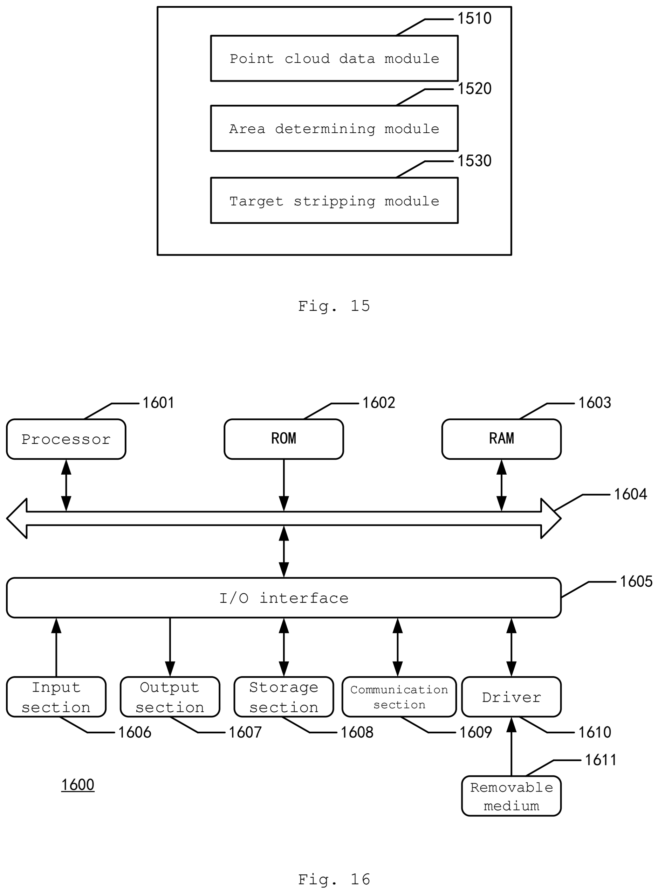

Based on the above-described method for stripping a target object from a three-dimensional CT image, the present disclosure also provides an apparatus for stripping a target object from a three-dimensional CT image. The apparatus will be described in detail below in conjunction with Fig. 15.

Fig. 15 schematically shows a structural block diagram of an apparatus for stripping a target object from a three-dimensional CT image according to an embodiment of the present disclosure.

As shown in Fig. 15, the apparatus 1500 for stripping a target object stripping from a three-dimensional CT image in this embodiment comprises a point cloud data module 1510, an area determining module 1520 and a target stripping module 1530.

The point cloud data module 1510 may perform operation S210 to obtain point cloud data based on CT data, wherein the CT data is obtained by performing computed tomography on N objects to be inspected by the security inspection device, where N is greater than or equal to 2.

In some embodiments, the point cloud data module 1510 is also configured to obtain a direct volume rendering result, a first hit position and a normal vector of the first hit position through the MRT technology based on the CT data before obtaining the point cloud data based on the CT data.

The area determining module 1520 may perform operation S220 for determining a target object area in N objects to be inspected according to the point cloud data.

In some embodiments, the area determining module 1520 may also perform operations S410 to S420, operations S710 to S720, operations S910 to S920, operations S1110 to S1120, and operations S1210 to S1220, which will not be described in detail here.

In some embodiments, the area determining module 1520 is further configured to determine a largest candidate surface from M candidate surfaces, and m candidate surfaces whose point cloud counts fall within a predetermined range relative to the largest candidate surface. According to the first prior rule, the largest candidate surface and m candidate surfaces are voted to determine the first surface.

In some embodiments, the area determining module 1520 is further configured to determine the first surface according to the first prior rule and the point cloud data. The size of the target object in the axial direction of the first surface is determined.

In some embodiments, the area determining module 1520 is further configured to determine a third surface and a fourth surface according to the second surface. The thickness is determined according to the third surface and the fourth surface.

In some embodiments, the area determining module 1520 is also configured to splice the third surface and the fourth surface along the first direction to obtain a fifth surface. The histogram is obtained based on the projection of the fifth surface in the first direction. The thickness is determined according to the histogram within a predetermined range.

In some embodiments, the area determining module 1520 is further configured to determine a pull rod area and/or a frame area of the suitcase according to a second prior rule and point cloud data before determining M candidate surfaces of the portable electronic device based on the point cloud data. The pull rod area and/or the frame area are/is removed from the point cloud data.

In some embodiments, the area determining module 1520 is further configured to obtain a first projection image of the point cloud data perpendicular to the first coordinate axis. According to the second prior rule, the pull rod area is determined from the horizontal projection of the first projection image, and/or the frame area is determined from the vertical projection of the first projection image.

In some embodiments, the area determining module 1520 is further configured to search the histogram generated by horizontal projection to determine S first wave peak positions. According to the second prior rule, the target wave peak position is determined from the S first wave peak positions. The first wave trough position corresponding to the target wave peak position is searched as the initial position of the pull rod area.

In some embodiments, the area determining module 1520 is further configured to search the histogram generated by vertical projection and determine two second wave peak positions at the left and right ends. The second wave trough positions corresponding to the respective second wave peak positions at the left and right ends are searched as the initial positions of the frame area at the left and right ends.

In some embodiments, the area determining module 1520 is further configured to project the point cloud data of the pull rod area perpendicular to the second coordinate axis to obtain a second projection image, wherein the second coordinate axis is perpendicular to the pull rod direction of the suitcase, and the projections of at least two pull rods of the suitcase in the second projection image are parallel to each other; and determine the pull rod area from the vertical projection of the second projection image according to the second prior rule.

In some embodiments, if a plurality of first surfaces is determined from the M candidate surfaces, the area determining module 1520 is further configured to determine the size of the target object in the axial direction of each first surface, and/or determine a target object area corresponding to each first surface.

The target stripping module 1530 may perform operation S230 for stripping a target object area from a three-dimensional CT image, wherein the three-dimensional CT image is generated according to the CT data.

In some embodiments, if a plurality of target object areas is determined according to the point cloud data, and the types of each target object are the same or different, the target stripping module 1530 is further configured to strip a plurality of target object areas from the three-dimensional CT image sequentially.

In some embodiments, the target object stripping device 1500 may further comprise a display module configured to display at least one image of the three-dimensional CT image before stripping, the three-dimensional CT image after stripping and the three-dimensional CT image of the target object on the security inspection image discrimination interface after stripping the target object area.

It is to be noted that, the target object stripping device 1500 comprises modules for performing the steps according to any of the embodiments described above. The implementations, solved technical problems, realized functions and achieved technical effects of each module/unit/subunit in some embodiments of the device are the same as or similar to the implementations, solved technical problems, realized functions and achieved technical effects of each corresponding step in some embodiments of the method, which will not be described in detail here.

According to the embodiment of the present disclosure, any multiple modules of the point cloud data module 1510, the area determining module 1520 and the target stripping module 1530 may be combined in one module for implementation, or any one module therein may be split into multiple modules. Alternatively, at least some functions of one or more of these modules may be combined with at least some functions of other modules and realized in one module.

According to the embodiment of the present disclosure, at least one of the point cloud data module 1510, the area determining module 1520 and the target stripping module 1530 may be at least partially implemented as a hardware circuit, such as a field programmable gate array (FPGA), a programmable logic array (PLA), a system on a chip, a system on a substrate, a system on a package, an application specific integrated circuit (ASIC), or may be implemented by hardware or firmware such as any other reasonable method of integrating or packaging a circuit, or implemented by any of three implementations comprising software, hardware and firmware or a suitable combination of any several thereof. Alternatively, at least one of the point cloud data module 1510, the area determining module 1520 and the target stripping module 1530 may be at least partially implemented as a computer program module that, when executed, may perform corresponding functions.

Fig. 16 schematically shows a block diagram of an electronic device suitable for implementing a method for stripping a target object from a three-dimensional CT image according to an embodiment of the present disclosure.

As shown in Fig. 16, the electronic device 1600 according to the embodiment of the present disclosure comprises a processor 1601, which may perform various suitable actions and processes according to a program stored in a read-only memory (ROM) 1602 or a program loaded into a random-access memory (RAM) 1603 from a storage section 1608. The processor 1601 may comprise, for example, a general-purpose microprocessor (for example, CPU), an instruction set processor and/or a related chipset and/or a special-purpose microprocessor (for example, application-specific integrated circuit (ASIC)) and the like. The processor 1601 may also comprise an on-board memory for caching purposes. The processor 1601 may comprise a single processing unit or a plurality of processing units for performing different actions of a method flow according to the embodiment of the present disclosure.

In the RAM 1603, various programs and data required for the operation of the electronic device 1600 and CT data scanned by the CT security inspection device are stored. A processor 1601, a ROM 1602 and a RAM 1603 are connected to each other via a bus 1604. The processor 1601 performs various operations of one or more method flows according to the embodiment of the present disclosure by executing programs in the ROM 1602 and/or the RAM 1603. It is to be noted that, the programs may also be stored in one or more memories other than the ROM 1602 and the RAM 1603. The processor 1601 may also perform various operations of the method flow according to the embodiment of the present disclosure by executing the programs stored in one or more memories.

According to the embodiment of the present disclosure, the electronic device 1600 may further comprise an input/output (I/O) interface 1605, which is also connected to the bus 1604. The electronic device 1600 may also comprise one or more of the following components connected to the I/O interface 1605: an input section 1606 comprising a keyboard, a mouse and the like; an output section 1607 such as a cathode ray tube (CRT), a liquid crystal display (LCD) and a loudspeaker; a storage section 1608 such as a hard disk; a communication section 1609 comprising a network interface card such as a LAN card and a modem, wherein the communication section 1609 performs communication processing via a network such as Internet; a driver 1610 also connected to the I/O interface 1605 as needed; a removable medium 1611, such as a magnetic disk, an optical disk, a magneto-optical disk and a semiconductor memory installed on the drive 1610 as needed, so that a computer program read therefrom is installed into the storage section 1608 as needed.

The present disclosure also provides a computer-readable storage medium, which may be comprised in the device/apparatus/system described in the above-described embodiments, and which may also exist alone without being assembled into the device/apparatus/system. The above-described computer-readable storage medium carries one or more programs that, when executed implements the method according to the embodiment of the present disclosure.

According to the embodiment of the present disclosure, the computer-readable storage medium may be a nonvolatile computer-readable storage medium, which may comprise, for example, but not limited to: a portable computer disk, a hard disk, a random access memory (RAM), a read-only memory (ROM), an erasable programmable read-only memory (EPROM or flash memory), a portable compact disk read-only memory (CD-ROM), an optical storage device, a magnetic storage device, or any suitable combination of the above-described embodiments. In the present disclosure, the computer-readable storage medium may be any tangible medium containing or storing a program, which may be used by an instruction execution system, apparatus or device or used by a combination thereof. For example, according to the embodiment of the present disclosure, the computer-readable storage medium may comprise the ROM 1602 and/or the RAM 1603 described above and/or one or more memories other than the ROM 1602 and/or the RAM 1603.

The embodiment of the present disclosure also comprises a computer program product, which comprises a computer program containing program codes for executing the method shown in the flow chart. When the computer program product runs in the computer system, the program codes are used to cause the computer system to implement the method provided by the embodiment of the present disclosure.

When the computer program is executed by the processor 1601, the above-described functions defined in the system/apparatus of the embodiment of the present disclosure are performed. According to the embodiment of the present disclosure, the systems, devices, modules, units and the like described above may be realized by computer program modules.

In one embodiment, the computer program may depend on a tangible storage medium such as an optical storage device and a magnetic storage device. In another embodiment, the computer program may also be transmitted and distributed in the form of signals on the network medium, downloaded and installed through the communication section 1609, and/or installed from the removable medium 1611. The program codes contained in the computer program may be transmitted by any suitable network medium, comprising but not limited to wireless, wired and the like, or any suitable combination of the above.

In such embodiment, the computer program may be downloaded and installed from the network through the communication section 1609 and/or installed from the removable medium 1611. When the computer program is executed by the processor 1601, the above-described functions defined in the system of the embodiment of the present disclosure are performed. According to the embodiment of the present disclosure, the systems, devices, devices, modules, units and the like described above may be realized by computer program modules.

According to the embodiment of the present disclosure, program codes for executing computer programs provided by the embodiment of the present disclosure may be written in any combination of one or more programming languages, and specifically, these calculation programs may be implemented by using high-level procedural and/or object-oriented programming languages and/or assembly/machine languages. Programming languages comprise but are not limited to Java, C++, python, "C" language or similar programming languages. The program codes may be executed entirely on the user's computing device, executed partly on the user's computing device, executed partly on a remote computing device, or executed entirely on the remote computing device or server. In the case of a remote computing device, the remote computing device may be connected to the user's computing device through any kind of network (comprising a local area network (LAN) or a wide area network (WAN)) or may be connected to an external computing device (for example, connected through Internet using an Internet service provider).

The flowcharts and block views in the accompanying drawings illustrate the possibly implemented architectures, functions, and operations of the system, method, and computer program product according to various embodiments of the present disclosure. In this regard, each block in the flowchart or block view may represent a module, a program segment, or a part of code, wherein the module, the program segment, or the part of code contains one or more executable instructions for realizing a specified logic function. It should also be noted that, in some alternative implementations, the functions marked in the block may also occur in a different order from the order marked in the accompanying drawings. For example, two blocks shown in succession which may actually be executed substantially in parallel, may sometimes also be executed in a reverse order, depending on the functions involved. It is also to be noted that each block in the block view or flowchart, and a combination of the blocks in the block view or flowchart, may be implemented by a dedicated hardware-based system that performs the specified functions or operations, or may be implemented by a combination of dedicated hardware and computer instructions.

It may be understood by those skilled in the art that, the features recited in various embodiments and/or claims of the present disclosure may be in combinations and/or conjunctions, even if such combinations or conjunctions are not explicitly recited in the present disclosure. In particular, the features recited in various embodiment and/or claims of that present disclosure may be in combinations and/or conjunctions without departing from the spirit and teaching of the present disclosure. All these combinations and/or conjunctions are within the scope of the present disclosure.

The embodiments of the present disclosure have been described above. However, these embodiments are only for the purpose of illustration, rather than for limiting the scope of the present disclosure. Although various embodiments have been described respectively as above, this does not mean that measures in the embodiments cannot be combined in use advantageously. The scope of the present disclosure is defined by the appended claims and equivalents thereof. Without departing from the scope of the present disclosure, those skilled in the art may made multiple substitutions and modifications, which are within the scope of the present disclosure.

**Claims**

1.   A method for stripping a target object from a three-dimensional CT image, comprising:

> obtaining point cloud data based on CT data, wherein the CT data is obtained by performing computed tomography on N objects to be inspected through a security inspection device, where N is greater than or equal to 2;
> determining a target object area in the N objects to be inspected according to the point cloud data; and
> stripping the target object area from the three-dimensional CT image, wherein the three-dimensional CT image is generated according to the CT data.

2.   The method according to claim 1, wherein after stripping the target object area, the method further comprises: displaying at least one image of the three-dimensional CT image before stripping, the three-dimensional CT image after stripping or the three-dimensional CT image of the target object on a security inspection image discrimination interface.

3.   The method according to claim 2, wherein the determining a target object area in the N objects to be inspected according to the point cloud data comprises:

> determining a local contour and size of the target object according to a first prior rule and the point cloud data, wherein the target object has a fixed shape in a use state or a non-use state, and the first prior rule is obtained according to the fixed shape of the target object; and
> determining the target object area based on the point cloud data according to the local contour and the size of the target object.

4.   The method according to claim 3, wherein the local contour of the target object comprises a first surface, and the determining a local contour and size of the target object comprises:

> determining the first surface according to the first prior rule and the point cloud data, wherein the first prior rule comprises a shape rule of the first surface; and
> determining the size of the target object in an axial direction of the first surface.

5.   The method according to claim 4, wherein before obtaining the point cloud data based on the CT data, the method further comprises:

> obtaining a direct volume rendering result, a first hit position and a normal vector of the first hit position through a multiple render targets technology based on the CT data,
> wherein the first hit position and the normal vector of the first hit position are used to obtain the point cloud data, and the direct volume rendering result is used to obtain the local contour and the size of the target object.

6.   The method according to claim 5, wherein the determining a local contour and size of the target object according to the first prior rule and the point cloud data comprises:

> over-segmenting the point cloud data by a super voxel clustering algorithm to obtain point cloud cluster data; and
> determining the local contour and the size of the target object from the point cloud cluster data according to the first prior rule.

7. The method according to any of claims 4 to 6, wherein the N objects to be inspected comprise a suitcase and N-1 objects to be inspected in the suitcase, and the target object comprises a portable electronic device.

8. The method according to claim 7, wherein the determining the first surface according to a first prior rule and the point cloud data comprises:

   determining M candidate surfaces of the portable electronic device based on the point cloud data, where M is greater than or equal to 1; and
   determining the first surface from the M candidate surfaces according to the first prior rule.

9. The method according to claim 8, wherein the determining the first surface from the M candidate surfaces according to the first prior rule comprises:

   determining a largest candidate surface from the M candidate surfaces, and m candidate surfaces whose point cloud counts fall within a predetermined range relative to the largest candidate surface, wherein m is greater than or equal to 0, and less than or equal to M-1; and
   voting on the largest candidate surface and the m candidate surfaces to determine the first surface according to the first prior rule.

10. The method according to claim 8, wherein the determining a size of the target object in an axial direction of the first surface comprises:

    performing direction correction and/or range correction on the first surface to obtain a second surface; and
    determining the size of the target object in an axial direction of the second surface.

11. The method according to claim 10, wherein the size of the target object comprises a thickness of the portable electronic device, and the determining a size of the target object in an axial direction of the second surface comprises:

    determining a third surface and a fourth surface according to the second surface, wherein the third surface and the fourth surface intersect with each other and are perpendicular to the second surface respectively; and
    determining the thickness according to the third surface and the fourth surface.

12. The method according to claim 11, wherein the determining the thickness according to the third surface and the fourth surface comprises:

    splicing the third surface and the fourth surface along a first direction to obtain a fifth surface, wherein the first direction is parallel to the second surface;
    obtaining a histogram based on the projection of the fifth surface in the first direction; and
    determining the thickness according to the histogram within a predetermined range.

13. The method according to claim 8, wherein before determining M candidate surfaces of the portable electronic device based on the point cloud data, the method further comprises:

    determining a pull rod area and/or a frame area of the suitcase according to a second prior rule and the point cloud data, wherein the second prior rule is obtained according to a fixed shape of the suitcase;
    removing the pull rod area and/or the frame area from the point cloud data.

14. The method according to claim 13, wherein the determining a pull rod area and/or a frame area of the suitcase comprises:

    obtaining a first projection image of the point cloud data perpendicular to a first coordinate axis, wherein the first coordinate axis is parallel to a pull rod direction of the suitcase; and
    determining the pull rod area from a horizontal projection of the first projection image, and/or determining the frame area from a vertical projection of the first projection image according to the second prior rule.

15. The method according to claim 14, wherein the determining a pull rod area of the suitcase comprises:

searching a histogram generated by the horizontal projection to determine S first wave peak positions, where S is greater than or equal to 1;
determining a target wave peak position from the S first wave peak positions according to the second prior rule, wherein the second prior rule comprises the prior position information of the pull rod area in the suitcase; and
searching a first wave trough position corresponding to the target wave peak position as an initial position of the pull rod area.

16. The method according to claim 14 or 15, wherein the determining a frame area of the suitcase comprises:

searching a histogram generated by the vertical projection to determine two second wave peak positions at a left end and a right end;
searching second wave trough positions corresponding to the respective second wave peak positions at the left end and the right end as initial positions of the frame area at the left end and the right end.

17. The method according to any of claims 13 to 15, wherein the determining a pull rod area of the suitcase further comprises:

projecting point cloud data of the pull rod area perpendicular to a second coordinate axis to obtain a second projection image, wherein the second coordinate axis is perpendicular to a pull rod direction of the suitcase, and the projections of at least two pull rods of the suitcase in the second projection image are parallel to each other; and
determining the pull rod area from a vertical projection of the second projection image according to the second prior rule.

18. The method according to claim 8, wherein if a plurality of first surfaces is determined from the M candidate surfaces, the method further comprises:

determining a size of the target object in an axial direction of each of the first surfaces; and/or
determining a target object area corresponding to each of the first surfaces.

19. The method according to claim 1, wherein if a plurality of target object areas is determined according to the point cloud data, and the types of each target object are the same or different, the stripping the target object area from the three-dimensional CT image comprises:
stripping a plurality of target object areas from the three-dimensional CT image sequentially.

20. An apparatus for stripping a target object from a three-dimensional CT image, comprising:

a point cloud data module configured to obtain point cloud data based on CT data, wherein the CT data is obtained by performing computed tomography on N objects to be inspected by a security inspection device, and N is greater than or equal to 2;
an area determining module configured to determine a target object area in the N objects to be inspected according to the point cloud data;
a target stripping module configured to strip the target object area from the three-dimensional CT image, wherein the three-dimensional CT image is generated according to the CT data.

21. A security inspection CT system, comprising:

a CT scanning device configured to obtain CT data by performing computed tomography on N objects to be inspected, where N is greater than or equal to 2;
an electronic device, comprising:

a memory for storing the CT data from the CT scanning device and/or one or more programs;
one or more processors;
wherein the one or more programs, when executed by the one or more processors, cause the one or more processors to perform the method according to any of claims 1 to 19.

22. A computer-readable storage medium, storing executable instructions that, when executed by a processor, cause the processor to perform the method according to any of claims 1 to 19.

23. A computer program product, comprising a computer program that, when executed by a processor, implements the method according to any of claims 1 to 19.

Fig. 1

Fig. 2

(a)

(b)

(c)

300

Fig. 3

S220

S410

The local contour and size of the target
object are determined according to the
first prior rule and the point cloud data

S420

The target object area is determined based
on the point cloud data according to the
local contour and size of the target object

Fig. 4

Fig. 5

Fig. 6

S710

The pull rod area and/or the frame area of the suitcase are/is determined according to a second prior rule and point cloud data

S720

The pull rod area and/or the frame area are/is removed from the point cloud data

Fig. 7

810

820

Fig. 8

S410

S910

The point cloud data is over-segmented by the super voxel clustering algorithm to obtain point cloud cluster data

S920

The local contour and size of the target object are determined from the point cloud cluster data according to the first prior rule

Fig. 9

1010

1020

Fig. 10

S1110

M candidate surfaces of the portable electronic device are determined based on the point cloud data

S1120

The first surface is determined from M candidate surfaces according to the first prior rule

Fig. 11

S1210

The first surface is subjected to direction correction and/or range correction to obtain a second surface

S1220

The size of the target object in the axial direction of the second surface is determined

Fig. 12

Fig. 13

Fig. 14

1510

Point cloud data module

1520

Area determining module

1530

Target stripping module

Fig. 15

1601
Processor

1602
ROM

1603
RAM

1604

1605
I/O interface

Input section
1606

Output section
1607

Storage section
1608

Communication section
1609

Driver
1610

Removable medium
1611

1600

Fig. 16

## INTERNATIONAL SEARCH REPORT

International application No.

**PCT/CN2023/141118**

### A. CLASSIFICATION OF SUBJECT MATTER

G06T 7/00(2017.01)i; G06T 7/12(2017.01)i; G06T 7/13(2017.01)i; G06V 10/762(2022.01)i

According to International Patent Classification (IPC) or to both national classification and IPC

### B. FIELDS SEARCHED

Minimum documentation searched (classification system followed by classification symbols)

IPC: G06T G06V

Documentation searched other than minimum documentation to the extent that such documents are included in the fields searched

Electronic data base consulted during the international search (name of data base and, where practicable, search terms used)

CNTXT; CNABS; CNKI; VEN; USTXT; WOTXT; EPTXT: 三维, CT, 图像, 目标, 对象, 点云, 剥离, 先验, 轮廓, 尺寸, three-dimensional, image, target, object, point cloud, stripping, prior, profile, size

### C. DOCUMENTS CONSIDERED TO BE RELEVANT

| Category* | Citation of document, with indication, where appropriate, of the relevant passages | Relevant to claim No. |
|---|---|---|
| PX | CN 116188385 A (NUCTECH CO., LTD. et al.) 30 May 2023 (2023-05-30)<br>claims 1-23, and description, paragraphs [0004]-[0198] | 1-23 |
| X | CN 105785462 A (NUCTECH CO., LTD.) 20 July 2016 (2016-07-20)<br>description, paragraphs [0004]-[0044] | 1, 2, 19-23 |
| A | CN 105785462 A (NUCTECH CO., LTD.) 20 July 2016 (2016-07-20)<br>description, paragraphs [0004]-[0044] | 3-18 |
| A | CN 114159085 A (UNITED IMAGINE RESEARCH INSTITUTE OF INNOVATIVE MEDICAL EQUIPMENT) 11 March 2022 (2022-03-11)<br>entire document | 1-23 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 February 2024** | **09 March 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/141118**

| Patent document cited in search report | | | Publication date (day/month/year) | Patent family member(s) | | | Publication date (day/month/year) |
|---|---|---|---|---|---|---|---|
| CN | 116188385 | A | 30 May 2023 | None | | | |
| CN | 105785462 | A | 20 July 2016 | CN | 105785462 | B | 22 February 2019 |
| | | | | WO | 2016095776 | A1 | 23 June 2016 |
| | | | | EP | 3112909 | A1 | 04 January 2017 |
| | | | | EP | 3112909 | A4 | 16 August 2017 |
| | | | | US | 2017276823 | A1 | 28 September 2017 |
| | | | | US | 10297050 | B2 | 21 May 2019 |
| | | | | EP | 3112909 | B1 | 20 April 2022 |
| CN | 114159085 | A | 11 March 2022 | US | 2023172488 | A1 | 08 June 2023 |

Form PCT/ISA/210 (patent family annex) (July 2022)

**EP 4 645 216 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211705003